# DEMANDE DE BREVET EUROPEEN

(11) **EP 1 617 591 A1**
(43) Date de publication de la demande: **18.01.2006**
(21) Numéro de dépôt: 04291811.0
(22) Date de dépôt: 15.07.2004
(51) Int. Cl.: H04L 12/18, H04L 29/06

(54) **Procédé et serveur de référencement de diffusion poste à poste de fichiers demandés par téléchargement à ce serveur**

(71) Demandeur: FRANCE TELECOM, 75015 Paris (FR)
(72) Inventeur: Mittig, Karel, 14000 Caen (FR); Agostini, Pierre, 14320 Feuguerolles (FR)
(74) Mandataire: Fréchède, Michel

(57) **Abrégé**

L'invention concerne un procédé et un serveur de référencement de diffusion poste à poste de fichiers. On mémorise (E₁, E₂) le nombre (Nᵢ) de messages de demandes de téléchargement relatives à chaque fichier (Fᵢ) pendant un délai déterminé (Tₚₛ).

Si pour l'un des fichiers Nᵢ > Sᵢ, Sᵢ désignant une valeur de seuil, on transmet (E₄) ce fichier en diffusion Multicast. Sinon on transmet (E'₄) ce fichier en diffusion Unicast.

Application au téléchargement de fichiers en réseau P2P, en réseau CDN ou autres.

## Description

Avec la multiplication des postes utilisateurs connectés au réseau INTERNET, les applications d'échange de fichiers poste à poste (peer to peer ou P2P), images, films, audio, ou mixtes entre utilisateurs, par échange poste à poste, ont connu une croissance très importante.

Ces applications (logiciels d'applications) s'installent directement sur les postes clients des Internautes. Chacun des postes connectés peut alors partager les fichiers de son choix et les proposer à la communauté des postes clients connectés au réseau P2P.

Le trafic de données support de ces fichiers est particulièrement important, car les fichiers transférés, notamment multimédia, sont de grande taille et le nombre de clients connectés croît de manière exponentielle.

A l'heure actuelle, ce volume de trafic peut représenter 70% du volume de trafic chez un fournisseur de service INTERNET (Internet Service Provider) ce qui se traduit par des contraintes de dimensionnement fortes pour les opérateurs de réseau.

Très peu de réseaux grand public supportent, toutefois, les solutions de routage Multicast. En conséquence, les protocoles de transmission de données utilisés par les applications P2P sont exclusivement exécutés par diffusion Unicast.

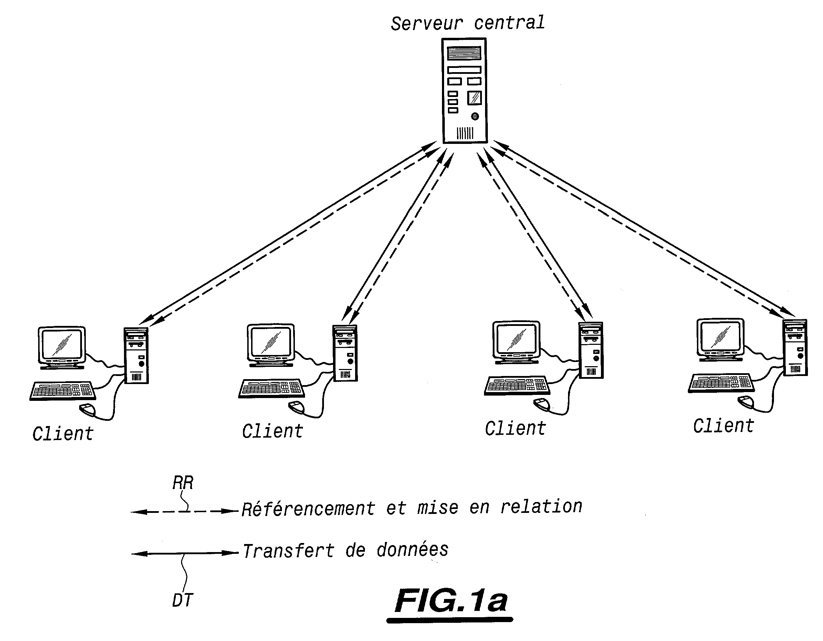

D'une manière générale, la plupart des applications sur le réseau INTERNET reposent sur une architecture de type client/serveur. Cette architecture, telle que représentée en figure 1a, distingue d'un côté les clients (applications installées sur les terminaux des utilisateurs pour exploiter différents services du réseau IP, tels que messagerie, WEB, etc...), et de l'autre les serveurs proprement dits, logiciels installés sur des machines offrant un ou plusieurs services aux clients.

Dans ce type d'architecture, aucun lien direct n'est créé entre les clients, l'ensemble des informations transitant par le seul serveur.

Bien que ce type d'architecture soit utilisé dans certains systèmes de mise en relation des utilisateurs, application de messagerie instantanée par exemple, il ne permet pas d'échanges directs entre les clients.

En effet, le volume d'information transitant par le serveur central ne peut excéder une valeur de seuil, qui serait atteinte rapidement sinon.

La limitation précitée a, en définitive, conditionné l'apparition des systèmes P2P proprement dits, permettant à des utilisateurs d'échanger directement des données entre eux.

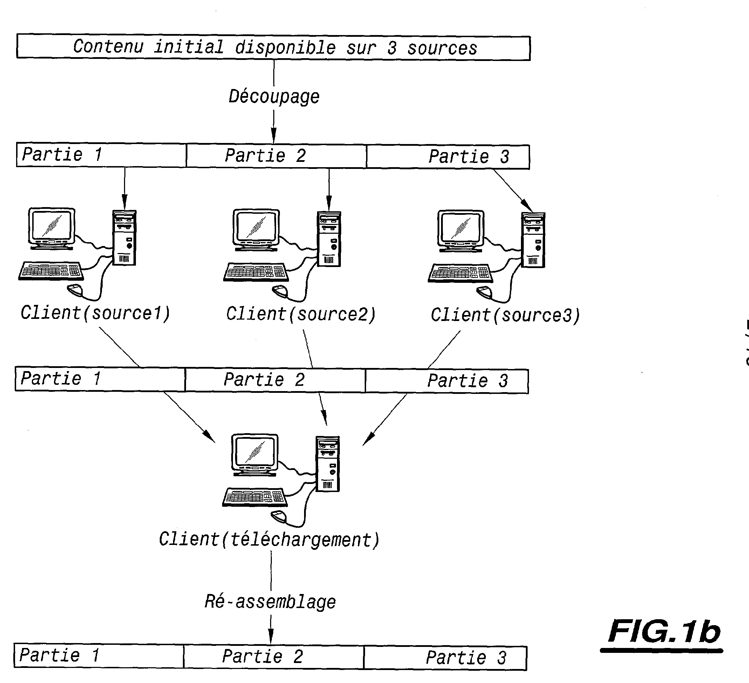

Bien que les différentes architectures P2P présentent des variations fonctionnelles, elles se basent toutes, ainsi que représenté en figure 1b, sur des connexions point à point dites Unicast entre les différents postes connectés en réseau constitutifs du système.

Ainsi, une connexion Unicast se définit par l'ouverture d'une connexion réseau entre une et une seule adresse IP source (client) et une et une seule adresse IP destination (le serveur). Une telle connexion n'autorise l'échange de messages qu'entre ces deux acteurs. En conséquence, un même message qui doit être envoyé à plusieurs destinataires nécessite autant de connexions et d'envois que de destinataires.

Dans les systèmes P2P, chaque client utilisateur joue le double rôle de client et de serveur. La partie cliente, appelée aussi récepteur, permet de télécharger des données distantes et la partie serveur, appelée aussi source, permet aux autres utilisateurs clients de se connecter et de télécharger des données locales.

Afin d'accélérer la vitesse de téléchargement des données et d'augmenter le nombre de sources pour un même contenu, les réseaux P2P permettent de découper un contenu en plusieurs parties.

Un client désirant un contenu spécifique peut ainsi recevoir chaque partie de sources différentes, ce qui permet d'accélérer la vitesse de téléchargement et d'éviter qu'un contenu ne soit plus disponible, si l'une des sources se déconnecte.

Le principe de diffusion Unicast est efficace, si l'on considère que chaque échange est unique et que les utilisateurs clients ne demandent pas les mêmes données dans un intervalle de temps réduit.

Cependant, bien que le mécanisme P2P, en raison de l'absence de serveur d'échanges centralisés, rende les mesures statiques complexes, les études actuelles montrent que plus de 50% du trafic généré par ces réseaux correspondent en fait à 1 % du volume disponible des données, ce qui tend à montrer une efficacité réduite, en raison de la redondance des demandes.

Par ailleurs, les réseaux P2P subissent également des effets de mode, les fichiers récents (dernier album d'un artiste, nouveau film) sont téléchargés par un maximum d'utilisateurs. Ce phénomène est renforcé par l'apparition de classements TOP 50, Hit Parade, etc... des réseaux P2P, lesquels indiquent un recoupement significatif des contenus téléchargés.

Le système P2P Napster, proposé dès 1999, représente un exemple de ces réseaux P2P traditionnels. Le réseau P2P Napster repose sur une architecture P2P centralisée.

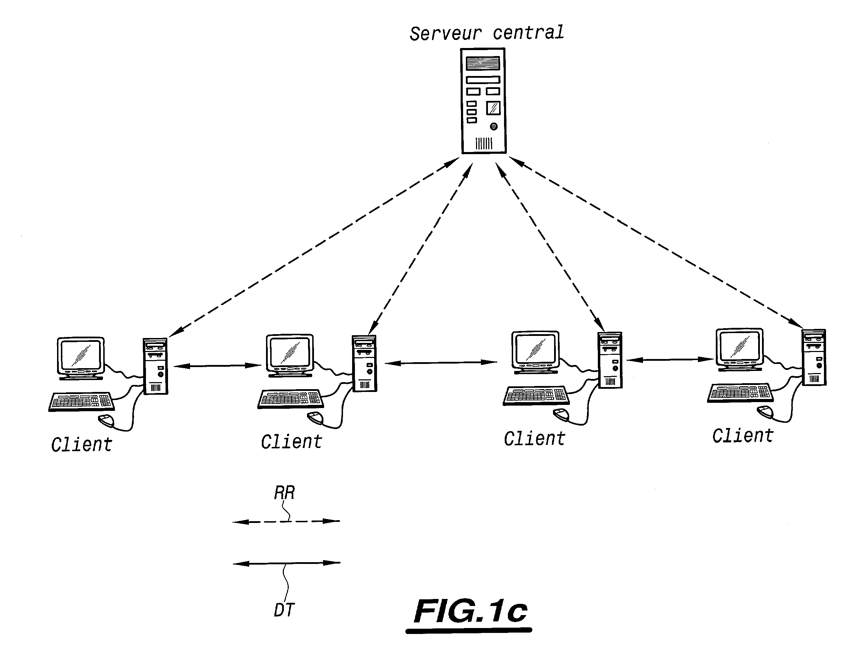

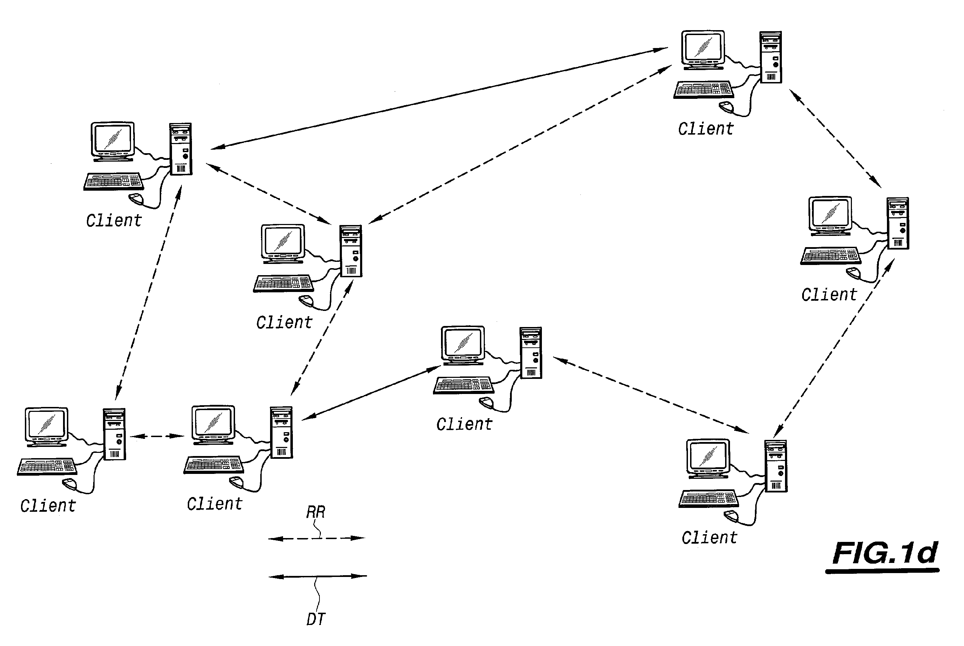

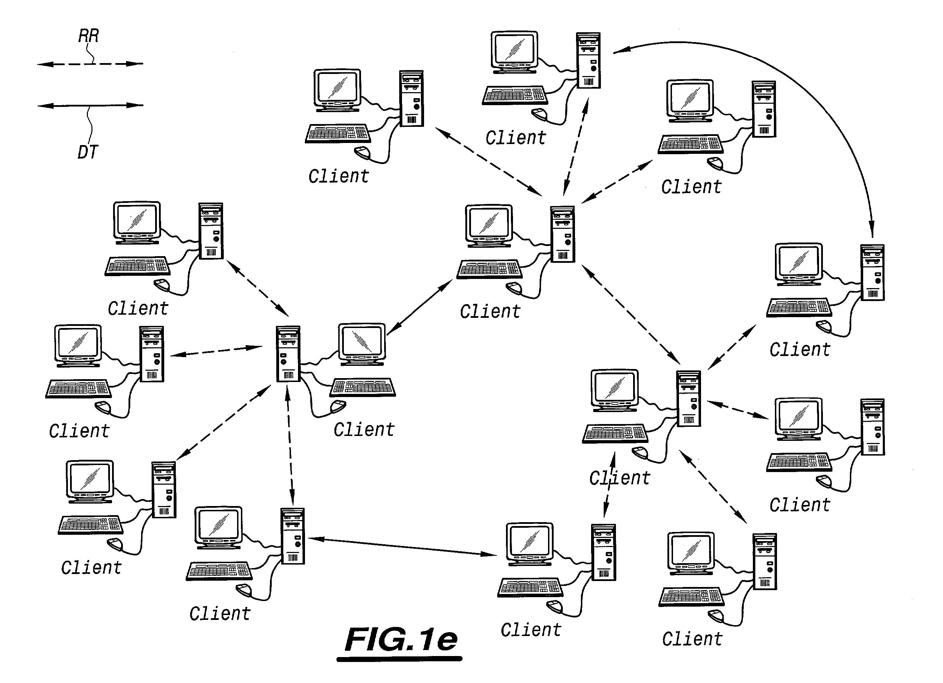

Dans l'architecture précitée, telle que représentée en figure 1 c, la mise en relation des clients est effectuée par l'intermédiaire d'un dispositif purement serveur, qui liste et indexe tous les utilisateurs clients connectés et les fichiers que ces derniers partagent, jouant le rôle de serveur central. La mise à jour de la base de données des utilisateurs clients et des fichiers partagés par ces derniers s'effectue en temps réel, dès qu'un utilisateur se connecte ou se déconnecte du service.

Une fois que le serveur central a joué son rôle, lorsque deux clients sont mis en relation, une liaison directe est établie entre ces deux clients, lesquels peuvent alors échanger des messages ou des fichiers.

Cette technique présente pour avantages principaux une bonne efficacité des recherches ainsi qu'une grande facilité d'utilisation. Toutefois, elle est totalement tributaire du serveur central, dont une défaillance entraîne une coupure du service, alors que l'échange des fichiers est contrôlé, le gestionnaire du serveur central dispose donc de toute latitude pour élaborer des fichiers clients et des profils utilisateurs.

Plus récemment, une architecture P2P décentralisée, le système open-source Gnutella, a été proposée en mars 2000, par la société Nullsoft.

Dans l'architecture décentralisée précitée, telle que représentée en figure 1 d, chaque client joue le rôle de client et de serveur sur un principe d'égalité. Les liaisons s'établissent directement d'utilisateur à utilisateur, de proche en proche. Un tel réseau est en perpétuelle mutation, au gré des connexions et déconnexions. Les différentes requêtes sont transférées et relayées d'un utilisateur à l'autre, mais les fichiers transférés le sont directement du demandeur au donneur.

L'avantage d'un tel système est une grande souplesse et une grande robustesse, liées à l'absence de noeud central. Aucun risque de disparaître brusquement de manière fortuite ou délibérée, un anonymat relatif étant assuré en raison de l'absence de serveur central.

En revanche, le système précité présente une lenteur inhérente à l'absence de base de données recensant les utilisateurs et fichiers partagés. En outre, la nécessité pour chaque client du système de relayer les requêtes de tous les autres, conduit à une forte perte en bande passante utile, pénalisante pour les échanges. Alors que l'anonymat précité permet de contourner les droits d'auteur et d'échanger des données de manière illégale, les moyens techniques permettant de contrôler la nature du transit sur ce système sont quasiment inexistants.

Enfin, des systèmes P2P hybrides ont été proposés, afin de pallier à la lenteur et à la perte relative en bande passante utile du système décentralisé précité. Ainsi que représenté sur la figure 1 e, de telles architectures reposent sur un mode mixte centralisé-décentralisé, utilisant des bases de données hiérarchiques et sont utilisées notamment dans le système FastTrack de la société KaZaA. Ce type de système intégrant les meilleures fonctionnalités des précédents est aujourd'hui le plus performant et le plus utilisé.

Les techniques et systèmes antérieurs représentés en figures 1a à 1e, présentent deux inconvénients majeurs, liés aux processus de transfert suivants :
1) forte occupation de la bande passante des liens réseaux du fait de téléchargements sous-optimisés ;
2) limitation du débit de téléchargement lié à la bande passante montante des émetteurs.

En ce qui concerne le premier inconvénient, des études récentes indiquent aujourd'hui que 40 à 60% du trafic Internet est lié aux réseaux P2P. Cette occupation massive est due, en partie, à la variété des fichiers échangés, mais surtout, au problème de répétition des transferts de quelques fichiers très demandés (Top 50 ou autres). Le mode unicast utilisé implique que le fichier soit diffusé autant de fois qu'il y a de demandeurs.

Cet inconvénient est en outre associé au fait qu'il n'y a pas dans les réseaux P2P de notion de proximité réseau.

Ainsi, les téléchargements s'effectuent entre les clients disponibles, c'est-à-dire ceux qui :
- possèdent le contenu demandé ;
- disposent des ressources réseau pour permettre à un autre client de télécharger le contenu demandé.

Les contenus, désignés « slots », sont généralement limités à quatre pour une liaison de type RTC ou ADSL. En raison de cette limitation, un client P2P peut très bien se retrouver en situation de télécharger un contenu sur des postes situés de l'autre côté de la planète, bien que d'autres clients, situés à proximité, disposent du même contenu, mais fournissent ce dernier à d'autres clients, eux aussi distants. Cette absence de gestion de la localisation réseau des clients a pour conséquences :
- un engorgement des liens nationaux et internationaux, alors que la plupart du trafic pourrait être traité au sein des réseaux des fournisseurs d'accès Internet, FAI ;
- une dégradation des performances pour le client, liée à la latence et à l'engorgement des connexions nationales et internationales précitées.

En ce qui concerne le deuxième inconvénient, on rappelle que celui-ci est lié à la nature dissymétrique des connexions de la majorité des clients P2P. Ainsi, une liaison RTC à 56 kb/s sur la voie descendante, dispose uniquement de 33,6 kb/s sur la voie montante, alors qu'une liaison ADSL disposant de 512 kb/s sur la voie descendante ne dispose en fait que de 128 kb/s sur la voie montante. Ce dernier type de liaison représentant celui utilisé par la majorité des utilisateurs de P2P, on peut admettre que la bande passante disponible sur la voie montante est quatre fois plus faible que celle disponible sur la voie descendante.

La limitation introduite par ce deuxième inconvénient est essentielle pour évaluer la capacité réelle de téléchargement des réseaux P2P. Si, en effet, tous les utilisateurs téléchargent autant de contenus qu'ils en servent, la bande passante effective, pour chaque client, est égale à la moyenne de la bande passante montante de tous les utilisateurs, soit environ 128 kb/s par utilisateur ADSL.

Bien que les mécanismes intégrés aux logiciels de téléchargement P2P permettent à un utilisateur de se connecter à plusieurs sources, pour télécharger un contenu, ils ne permettent toutefois pas d'accroître la capacité physique du réseau P2P.

Cet inconvénient est très pénalisant pour les échanges, car les utilisateurs ne peuvent bénéficier de toute la bande passante offerte par leur abonnement.

La présente invention a pour objet de remédier aux inconvénients précités des réseaux P2P classiques, grâce à l'utilisation du processus de diffusion Multicast pour la mise en oeuvre d'un système P2P, le réseau étant réputé supporter le processus de diffusion Multicast de bout en bout.

D'une manière générale, on rappelle que le processus de diffusion Multicast repose sur un principe similaire à celui de la diffusion télévisuelle, dans lequel les clients n'ont pas de contrôle sur la programmation. Au contraire, les réseaux P2P répondent aux demandes de clients, qui peuvent chacun solliciter un contenu différent.

La présente invention a pour objet un procédé de diffusion poste à poste de fichiers demandés par téléchargement, reposant sur le principe selon lequel les demandes d'une majorité de clients portent sur un même contenu ou un contenu similaire sur un laps de temps restreint, de l'ordre de l'heure, de la journée ou au plus de la semaine. Elle a pour objet, sur la base du principe précité, la mise en oeuvre d'une temporisation des demandes clients, permettant d'agréger les demandes et de créer des créneaux de diffusions spécifiques pour chaque contenu. En outre, la présente invention a pour objet un procédé applicable au contexte des CDNₛ (Content Delivery Networks), réseaux de diffusion de contenu.

Le procédé de diffusion poste à poste de fichiers demandés par téléchargement par une pluralité de messages de demandes de téléchargement adressés à un serveur de fichiers par des terminaux utilisateurs, objet de la présente invention, est remarquable en ce qu'il consiste à mémoriser le nombre de ces messages de demandes de téléchargement reçus pendant un délai prédéterminé, et, si, pour l'un des fichiers déterminé, le nombre de messages de demandes mémorisé est supérieur à une valeur de seuil, transmettre ce fichier par diffusion Multicast, et, sinon, transmettre ledit fichier par diffusion Unicast.

Le serveur de référencement de diffusion poste à poste de fichiers demandés par téléchargement par une pluralité de messages de demandes de téléchargement adressés à ce serveur centralisé par des terminaux d'utilisateur, objet de la présente invention, est remarquable en ce qu'il comporte au moins, un module d'établissement d'un délai prédéterminé, intervalle de temps entre un instant de début et un instant de fin de délai, un module de comptage et de mémorisation du nombre de messages de demandes de téléchargement reçus pendant le délai prédéterminé, un module de comparaison du nombre de fichiers mémorisés, par fichiers de même référence, à une valeur de seuil, et, si pour l'un de ces fichiers déterminé, le nombre de messages de demandes est supérieur à cette valeur de seuil, un module de commande actionné par cette comparaison supérieure permettant d'engendrer un signal de commande de transmission de ce fichier par diffusion Multicast, et, sinon, si pour l'un de ces fichiers déterminé, le nombre de messages de demandes mémorisé est inférieur ou égal à cette valeur de seuil, un module de commande actionné par cette comparaison inférieure permettant d'engendrer un signal de commande de transmission de ce fichier par diffusion Unicast.

Le procédé et le serveur centralisé de diffusion poste à poste, objets de la présente invention, trouvent application à la gestion des réseaux IP pour le téléchargement de fichiers tels que les fichiers ou objets multimédia, films vidéo par exemple.

Ils trouvent plus particulièrement application au téléchargement de fichiers en réseau P2P, en réseau CDN ou autres.

D'une manière plus spécifique, le terme P2P recouvre, au sens propre, le réseau P2P grand public composé d'utilisateurs anonymes, et, au sens large, tout réseau public ou privé fonctionnant sur une architecture P2P et de collaboration inter-terminaux.

Ils seront mieux compris à la lecture de la description et à l'observation des dessins ci-après dans lesquels, outre les figures 1 a et 1 e relatives à des procédés de diffusion de l'art antérieur :
- la figure 2a représente, à titre illustratif, un organigramme des étapes essentielles de mise en oeuvre du procédé objet de l'invention ;
- la figure 2b représente, à titre illustratif, un organigramme des étapes essentielles d'une variante préférentielle de mise en oeuvre du procédé objet de l'invention ;
- la figure 3a représente à titre illustratif un diagramme de mise en oeuvre d'une étape dite de référencement des objets/utilisateurs du procédé objet de l'invention représenté en figure 2a ou 2b ;
- la figure 3b représente, à titre illustratif, un diagramme de mise en oeuvre d'une étape dite de comptabilisation, mémorisation et de traitement du procédé objet de l'invention représenté en figure 2a ou 2b ;
- la figure 3c représente, à titre illustratif, un diagramme de mise en oeuvre d'une étape dite de déclenchement de la diffusion Multicast du procédé objet de l'invention représenté en figure 2a ou 2b ;
- la figure 3d représente, à titre illustratif, un diagramme de mise en oeuvre d'une étape dite de déclenchement de la diffusion Unicast du procédé objet de l'invention représenté en figure 2a ou 2b ;
- la figure 3e représente, à titre illustratif, un diagramme de mise en oeuvre d'une étape dite de diffusion Multicast du procédé objet de l'invention représenté en figure 2a ou 2b ;
- la figure 3f, à titre illustratif, un diagramme de mise en oeuvre d'une étape dite de compte rendu exécutée par chaque terminal client vers le réseau de référencement dans le cadre du procédé objet de l'invention représenté en figure 2a ou 2b ;
- la figure 4 représente, à titre illustratif, un schéma fonctionnel d'un serveur de référencement plus particulièrement adapté à la mise en oeuvre du procédé objet de l'invention ;
- la figure 5 représente, à titre illustratif, un schéma d'application du procédé et du serveur de référencement, objets de l'invention, aux réseaux de diffusion de contenu.

Préalablement à la description du procédé de diffusion poste à poste de fichiers demandés par téléchargement, conforme à l'objet de la présente invention, un rappel sur les technologies Multicast sera maintenant donné.

Les technologies Multicast sont des technologies de routage qui permettent à un poste émetteur d'adresse IP, désigné @IPSource, d'émettre des données, c'est-à-dire des fichiers, sur une adresse IP unique désignée @IPM, dite adresse "Multicast", à destination de l'ensemble de postes de réception en écoute ou connectés sur l'adresse Multicast précitée.

Dans les protocoles Unicast au contraire, un émetteur d'adresses donné @IPSource émet des données vers un récepteur unique d'adresse @IPDestination en mode poste à poste. Dans les protocoles Unicast précités les routeurs ne font que diriger les paquets issus de l'adresse @IPSource vers l'adresse @IPDestination.

En mode Multicast, au contraire, les routeurs répètent les paquets de données émis sur l'adresse Multicast @IPM vers l'ensemble des postes de réception ou routeurs inscrits en réception pour l'adresse Multicast précitée. Un émetteur d'adresse @IPSource peut ainsi émettre une seule fois des paquets vers un groupe de destinataires, les routeurs assurant la duplication des paquets lorsque cela est nécessaire.

Plusieurs protocoles de routage Multicast existent avec des limitations et particularités diverses.

On indique que le routage Multicast ne fait pas de distinction en tenant compte du port utilisé pour les émissions.

En conséquence, le nombre d'adresses Multicast utilisable pour des émissions simultanées est relativement limité. Toutefois, des protocoles plus élaborés, tels que le protocole PIM_SSM, permettent de faire face à une telle difficulté.

En particulier, le protocole PIM_SSM, visant à remplacer le protocole précédemment cité, permet de remédier à ce problème en routant sur le couple d'adresses (@IPM, @IPSource) et non plus seulement sur l'adresse Multicast @IPM.

De ce fait, une pluralité d'émetteurs peut utiliser potentiellement la même adresse IP Multicast pour diffuser leur contenu simultanément.

Dans ces conditions, les postes clients récepteurs doivent simplement se mettre en écoute pour le couple d'adresses précitées et non plus seulement sur l'adresse Multicast @IPM.

Les technologies Multicast ne permettant pas de garantir que les paquets envoyés par des récepteurs soient reçus dans le même ordre par les récepteurs, il revient au niveau applicatif d'assurer le traitement des paquets de données et leur exploitation. L'application de chaque utilisateur client doit alors assurer la distinction, le tri, l'ordonnancement des paquets de données reçus sur une adresse Multicast @IPM.

De préférence, le protocole utilisé sera le protocole PIM_SSM, en raison du fait que ce dernier permet de lever la limitation relative au faible nombre d'adresses Multicast utilisables.

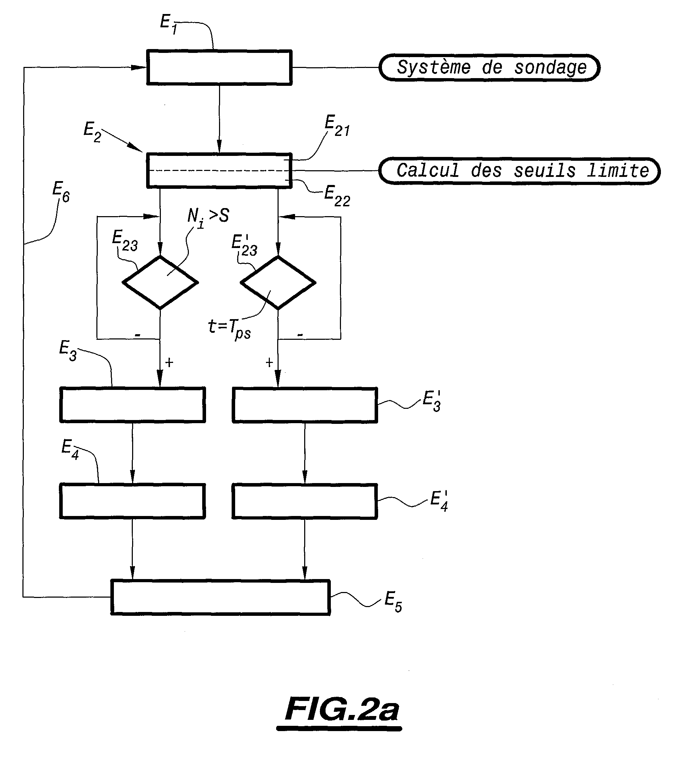

Le procédé de diffusion poste à poste de fichiers demandés par téléchargement, objet de la présente invention, sera maintenant décrit en liaison avec la figure 2a et les figures suivantes.

En référence à la figure 2a précitée, on indique que Tⱼ désigne le terminal d'un poste client ;
- Fᵢⱼ désigne un fichier de référence, nom, signature ou index i demandé par le terminal Tⱼ d'un poste client ;
- Fi désigne un fichier de nom, de signature ou index i ;
- Nᵢ indique le nombre de messages de demande de fichiers mémorisé pour le fichier Fᵢ ;
- Sᵢ désigne une valeur de seuil dédiée à l'ensemble des fichiers Fᵢⱼ, c'est-à-dire pour l'ensemble des fichiers d'index i, demandés par tout terminal Tⱼ d'un poste client.

En référence à la figure 2a précitée, le procédé de diffusion poste à poste de fichiers Fᵢⱼ demandés par téléchargement par une pluralité de messages de demande de téléchargement adressés à un serveur de référencement par des terminaux utilisateurs Tⱼ, objet de la présente invention, est remarquable en ce qu'il consiste à mémoriser en des étapes E₁ et E₂ représentées sur la figure précitée, le nombre Nᵢ de ces messages de demande de téléchargement reçus pendant un délai prédéterminé, noté Tₚₛ, et, si pour l'un des fichiers déterminés Fᵢ, le nombre Nᵢ de messages de demande mémorisé est supérieur à une valeur de seuil Sᵢ, on transmet en une étape E₄, le fichier Fᵢ par diffusion Multicast, et sinon, on transmet en une étape E'₄, le fichier Fᵢ par diffusion Unicast.

En référence à la même figure 2a, on indique que l'étape E₂, selon laquelle on mémorise le nombre Nᵢ de messages de demande, comporte une sous-étape préalable E₁ de recensement des terminaux utilisateurs connectés Tⱼ et des fichiers disponibles auprès de chaque client utilisateur. La sous-étape préalable E₁ peut être réalisée par un processus de sondage, ainsi qu'il sera décrit ultérieurement dans la description.

En outre, en référence à la même figure 2a, on indique que l'étape selon laquelle on mémorise le nombre Nᵢ de messages de demande, c'est-à-dire l'étape E₂, comporte, suite à la sous-étape E₁ de recensement par sondage, une sous-étape E₂₁ de comptabilisation et de mémorisation des messages de demande accompagnée d'une sous-étape E₂₂ de vérification des réponses aux messages de demande et de transmission de ces réponses aux utilisateurs demandeurs. La sous-étape E₂₂ peut en particulier vérifier les demandes de réémission de tout ou partie d'un fichier donné.

Enfin, en référence à la même figure 2a, on indique que, suite à la sous-étape E₂₁ de comptabilisation et de mémorisation, mais préalablement à l'étape E₄, selon laquelle on transmet le fichier par diffusion Multicast, le procédé objet de la présente invention comporte en outre une sous-étape E₂₃ de test de comparaison du nombre Nᵢ de messages de demande à la valeur de seuil Sᵢ, par exemple.

Sur réponse positive au test E₂₃ précité, le procédé objet de l'invention comporte en outre une sous-étape E₃ de transmission, d'une part, aux terminaux sources des fichiers d'une requête de transmission sur une adresse Multicast, et, d'autre part, aux terminaux utilisateurs, d'un message d'information de la diffusion Multicast.

De manière symétrique, ainsi que représenté sur la figure 2a, suite à la sous-étape E₂₁ de comptabilisation et de mémorisation, mais préalablement à l'étape selon laquelle on transmet E'₄ le fichier par diffusion Unicast, le procédé objet de l'invention comporte en outre une sous-étape E'₂₃ de test de comparaison du temps de mémorisation au délai prédéterminé Tₚₛ.

Sur réponse positive à la sous-étape de test E'₂₃, le procédé objet de l'invention comprend une sous-étape E'₃ de transmission aux terminaux utilisateurs d'un ordre de transfert de fichier par diffusion Unicast.

Enfin, en référence à la même figure 2a, on indique que les étapes de transmission par diffusion Multicast E₄ respectivement par diffusion Unicast E'₄ sont suivies d'une étape E₅, E₆ de retour par chaque terminal Tj au système d'indexation des fichiers obtenus, lorsque ceux-ci sont complets, ou bien d'une requête de réémission ou de complément, lorsque ceux-ci sont incomplets ou non reçus, cette étape ramenant à l'étape E₁ de la figure 2a, laquelle est analysée à la sous-étape E₂₂.

De préférence, et afin d'assurer une gestion correcte de la connexion de tout utilisateur et, en particulier, de tout terminal Tⱼ d'un utilisateur client, on indique que tout client recensé parmi les utilisateurs connectés au réseau P2P, c'est-à-dire tout terminal Tⱼ de ce dernier, signale sa présence périodiquement au serveur centralisé. Ceci permet d'assurer une gestion correcte de la transmission des fichiers demandés tant que le dernier paquet relatif à un fichier Fᵢⱼ, on rappelle que i désigne en fait l'index de référence, nom ou signature du fichier et j l'indice de référence ou adresse du terminal Tj demandeur de ce fichier, n'a pas été transmis au terminal Tj du client correspondant.

La signalisation de présence périodique peut être effectuée à l'aide d'un processus, semblable à un processus de polling inversé, connu en tant que tel de l'homme du métier et qui, pour cette raison, ne sera pas décrit en détails.

De la même façon, et afin d'assurer une gestion cohérente du procédé objet de la présente invention, c'est-à-dire une transmission sensiblement sans défaut des fichiers demandés auprès de chacun des terminaux Tⱼ demandeur de chaque fichier Fᵢⱼ , le procédé objet de l'invention à l'étape E₂ ou sous-étape de vérification des réponses aux messages de demande et de transmission de ces réponses aux utilisateurs demandeurs, peut avantageusement être exécuté de façon que chaque réponse envoyée par le serveur de référencement à chacun des clients utilisateurs demandeurs comporte au moins l'adresse IP Multicast sur laquelle le fichier demandé par le client utilisateur, c'est-à-dire le terminal Tⱼ de ce dernier sera émis, ainsi que, de manière avantageuse, le délai maximum d'attente avant la prochaine diffusion Multicast à l'adresse IP Multicast considérée.

Ce mode opératoire permet à chaque client utilisateur demandeur, c'est-à-dire chaque terminal Tⱼ demandeur, de se placer en réception ou en écoute sur l'adresse IP Multicast considérée.

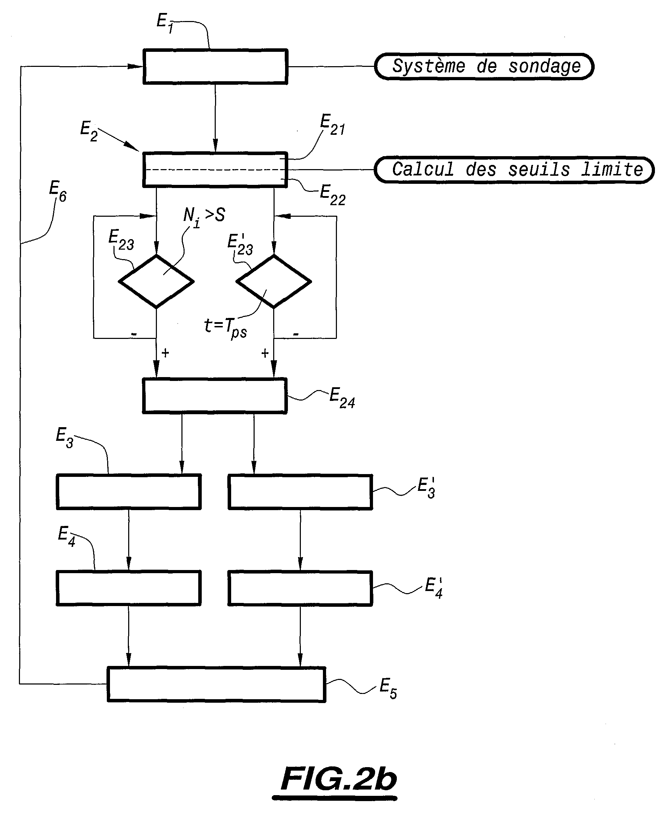

Un mode de mise en oeuvre préférentiel du procédé objet de la présente invention sera maintenant décrit en liaison avec la figure 2b.

Sur la figure 2b, on indique que les mêmes références désignent les mêmes éléments et les mêmes étapes et sous-étapes que dans le cas de la figure 2a.

Toutefois, ainsi que représenté sur la figure 2b précitée, préalablement à la sous-étape de transmission aux sources de fichiers d'une requête de transmission sur une adresse Multicast, sous-étape E₃ respectivement de transmission aux terminaux utilisateurs d'un ordre de transfert de fichier par diffusion Unicast sous-étape E'₃, le procédé objet de l'invention comporte en outre une sous-étape E₂₄ de détermination du mode de diffusion optimal sur chaque portion du réseau pour atteindre chacun des demandeurs du fichier demandé.

A titre d'exemple non limitatif, on indique que le mode de diffusion optimal peut être déterminé à partir d'informations, telles que la localisation des clients demandeurs, c'est-à-dire des terminaux Tⱼ précités, ainsi que du regroupement de ces demandeurs et de ces terminaux par réseau, à partir de la localisation des postes sources disponibles et des débits montants disponibles sur ces postes sources ainsi que des réseaux à traverser et des performances de ces réseaux correspondantes entre source et récepteur. Le débit optimal peut être défini, par exemple, comme consistant à calculer la moyenne des débits, à définir un écart-type autour de ce débit et à transmettre en mode Multicast lorsque le débit est dans la moyenne, à l'écart-type près, sinon transmettre en mode Unicast.

Enfin, le procédé objet de l'invention est particulièrement avantageux dans la mesure où celui-ci permet d'opérer en diffusion multisource, multirécepteur : chaque client émetteur, c'est-à-dire finalement chaque terminal Tⱼ, lorsqu'il dispose des fichiers demandés par un terminal Tⱼ₊ₖ voisin ou non de ce dernier, diffuse au moins une partie du fichier demandé au moyen de la totalité de son débit montant disponible vers une adresse de diffusion Multicast sur laquelle l'ensemble des clients demandeurs est connecté.

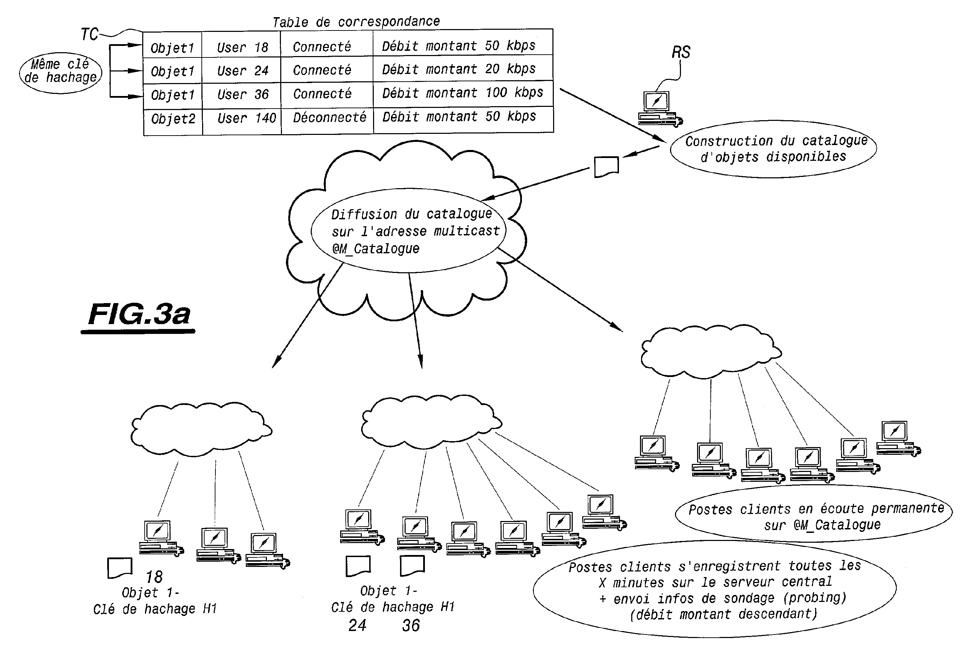

Une description plus détaillée d'une mise en oeuvre spécifique des différentes étapes représentées en figure 2a ou 2b sera maintenant donnée en liaison avec les figures 3a à 3f.

En ce qui concerne la sous-étape E₁ de recensement des utilisateurs connectés et des objets disponibles, on indique qu'une telle fonction peut correspondre à une fonction classique des systèmes P2P, cette fonction étant nécessaire pour la mise en oeuvre du procédé objet de la présente invention.

La fonction précitée permet de référencer en permanence les utilisateurs, c'est-à-dire les terminaux Tⱼ de ces derniers, connectés au réseau P2P, ainsi que les fichiers Fᵢⱼ ou les flux qu'ils mettent à la disposition des autres utilisateurs distincts.

D'une manière générale, on indique que les applications spécifiques "propriétaires" P2P qui sont installées sur les postes clients des utilisateurs, c'est-à-dire sur les terminaux Tⱼ de ces derniers, intègrent une fonction d'auto-déclaration au lancement du logiciel auprès d'un serveur central ou d'un client maître en mode hybride.

Le lancement du logiciel précité implique en fait le référencement de l'utilisateur et de son terminal Tⱼ et la mise à jour des fichiers que ce dernier partage dans un répertoire dédié.

L'utilisateur du terminal Tⱼ est ensuite recensé parmi les utilisateurs connectés au réseau P2P et doit, ainsi que mentionné précédemment dans la description, signaler sa présence périodiquement.

Lorsque ce dernier ne signale plus au serveur centralisé pendant une durée déterminée sa présence, il est alors considéré comme déconnecté et les fichiers dont il dispose sont déclarés inaccessibles.

Dans ces conditions, le serveur centralisé, le cas échéant, un client maître dans le cas des procédés de l'art antérieur, est alors en mesure de stocker dans une base de données les informations correspondantes précitées.

Selon un aspect remarquable du procédé objet de la présente invention, il est possible d'envisager de diffuser les flux de données en temps réel, c'est-à-dire en "streaming" en langage anglosaxon, et non plus seulement, des fichiers. La déclaration des fichiers disponibles sur un poste émetteur, c'est-à-dire des objets informatiques correspondants désignés Objet 1, Objet 2 sur la figure 3a, est donc adaptée au type d'utilisation précitée, à partir du nom du flux vidéo du film au datage du début de diffusion et aux conditions de diffusion, telles que débit, volume de données diffusées, par exemple.

Sur la figure 3a, on indique que les conditions précitées sont définies à partir d'une table de correspondance TC pour laquelle, pour un même Objet 1, une même clé de hachage H₁ est utilisée, le nom de l'utilisateur demandeur défini par User 18, User 24, User 36 et User 140 est indiqué, l'état connecté ou non connecté de cet utilisateur est indiqué ainsi que le débit montant et la valeur du débit montant alloué pour la transmission du fichier Fij ou de l'objet correspondant.

Par ailleurs, les temps de téléchargement entre utilisateurs dépendent essentiellement :
- du débit montant disponible côté émetteur d'un objet, c'est-à-dire d'un fichier Fᵢⱼ;
- du débit descendant disponible côté récepteur d'un objet, c'est-à-dire de ce même fichier Fᵢⱼ.

Les applications de type P2P intègrent en général une fonction de sondage (probing) permettant de déterminer les débits disponibles pour les échanges avec les différents clients utilisateurs.

L'ensemble des informations disponibles à partir de la mise en oeuvre des fonctions précitées permet, à partir d'une table de correspondance TC, de tenir à jour un catalogue des objets disponibles permettant la construction d'un catalogue d'objets disponibles à un instant donné et des conditions de téléchargement associées, c'est-à-dire essentiellement de débit entre utilisateurs.

Selon un aspect avantageux du procédé objet de la présente invention, il est également possible de diffuser en permanence le catalogue ou un extrait de ce catalogue, tel que le catalogue TOP100 ou autre, sur un canal Multicast dédié, afin de limiter les interrogations au site central et de reporter la charge des recherches d'objets sur les clients eux-mêmes.

Dans tous les cas, le système comporte, pour la mise en oeuvre du procédé objet de la présente invention, une fonction de recherche d'un objet donné.

De manière pratique, différents utilisateurs, c'est-à-dire différents terminaux Tⱼ connectés, sont à même de mettre à disposition le même fichier demandé Fᵢ.

En conséquence et d'une manière générale, les applications P2P sont à même de calculer une signature des fichiers, à l'aide d'une clé de hachage, afin de détecter les fichiers identiques présents chez plusieurs utilisateurs. La clé de hachage est connue des diverses entités.

L'ensemble des fonctionnalités précitées est illustré en figure 3A.

Sur la figure précitée, les utilisateurs 18, 24 et 36 mettent à disposition des autres utilisateurs connectés un même objet, dit Objet 1 constituant un fichier Fᵢ.

Ainsi que représenté sur la figure 3a précitée, la diffusion du catalogue sur l'adresse Multicast @M_catalogue permet à tout terminal utilisateur de se positionner en connexion, c'est-à-dire en écoute permanente, sur l'adresse de diffusion Multicast précitée.

Enfin, chaque terminal utilisateur Tⱼ s'enregistre toutes les x minutes, c'est-à-dire en général 5 à 10 minutes, sur le serveur de référencement envoyant des informations de sondage, débit montant et descendant.

La clé de hachage est notée H₁ pour le même Objet 1 de la figure 3a.

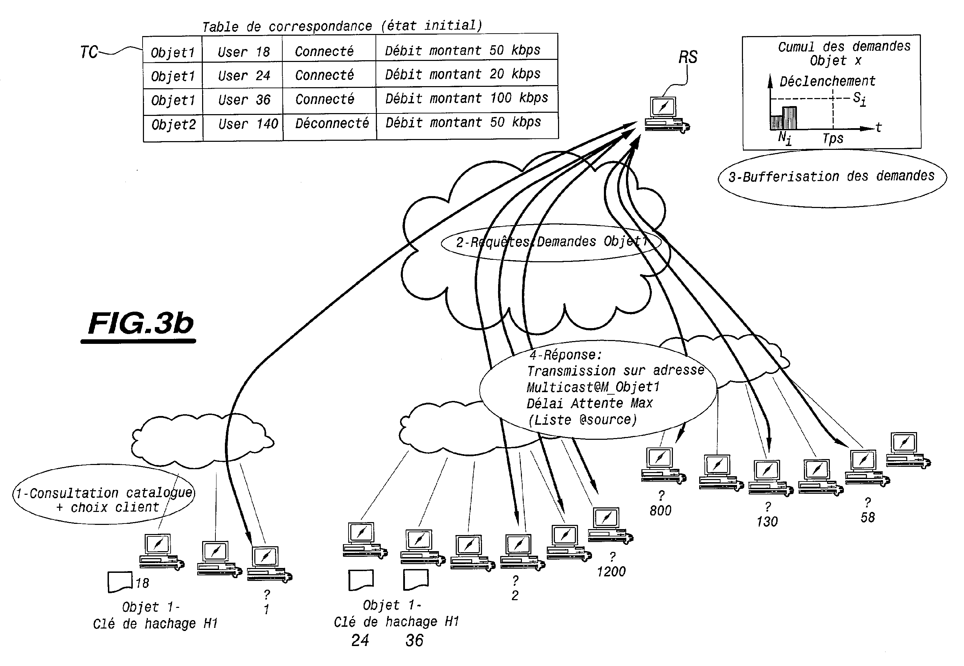

La figure 3b représente l'étape de comptabilisation et de mémorisation des demandes de traitement des réponses. Il s'agit en fait de la succession des sous-étapes E₂₁, E₂₂, E₂₃, E'₂₃ de la figure 2a ou 2b.

En référence à la figure 3b précitée, dans un premier temps, un certain nombre d'utilisateurs et leurs terminaux Tⱼ connectés au réseau recherchent un objet à télécharger par l'intermédiaire du catalogue diffusé sur l'adresse Multicast @M_catalogue précédemment mentionnée en liaison avec la figure 3a, par exemple.

Dans le cadre de la figure 3b, on indique que les utilisateurs portant les numéros 1, 2, 1200, 800, 130 et 58 et auxquels est associé un point d'interrogation sont tous demandeurs du fichier Fᵢ désigné Objet 1 lequel est réputé stocké sur les terminaux des utilisateurs désignés 18, 24 et 36.

Chacun des terminaux des utilisateurs demandeurs 1, 2, 1200, 800, 130, 58 adresse au serveur de référencement RS une requête pour demander ou télécharger le fichier Fᵢ = Objet 1.

Le serveur de référencement RS met alors en oeuvre la pluralité des fonctions ci-après :
- comptabilisation des demandes par objet, c'est-à-dire détermination du nombre Nᵢ de fichier Fᵢ ;
- gestion des cycles de diffusion Multicast à partir d'une analyse statistique ;
- envoi de réponses aux demandeurs d'objets, c'est-à-dire de fichiers Fᵢ.

En ce qui concerne la comptabilisation des demandes par objet, c'est-à-dire par index i désignant ou caractérisant ces objets, on indique que, alors que, dans un système P2P classique le serveur centralisé transmet au fil de l'eau à chaque demandeur d'un objet les coordonnées d'un poste proposant l'objet précité, le demandeur devant alors effectuer un téléchargement direct poste à poste classique, au contraire dans le cadre du procédé objet de la présente invention, et, dans le but de bénéficier de la multiréception en diffusion Multicast, les demandes, c'est-à-dire les messages de demandes, sont accumulées pendant un certain temps, au plus la durée du seuil de déclenchement temporel Tₚₛ précédemment mentionnée dans la description, et sont au contraire satisfaites toutes en même temps.

Conformément à un aspect remarquable du procédé objet de la présente invention, le serveur de référencement RS comptabilise dans un premier temps les demandes pour chaque objet, c'est-à-dire pour chaque fichier Fᵢ.

Optionnellement, il peut également stocker les adresses des demandeurs, c'est-à-dire la référence j déterminant l'adresse du terminal Tⱼ demandeur afin d'en tirer, de manière avantageuse, une notion de localisation géographique ou de proximité réseau, laquelle sera utilisée ultérieurement dans la mise en oeuvre du procédé par une fonction d'optimisation de la diffusion d'objets, laquelle sera décrite plus en détails ultérieurement dans la description.

Du point de vue utilisateur, le procédé objet de la présente invention n'apparaît attractif que si le temps cumulé de transmission total de chaque fichier demandé Fᵢ incluant le temps d'attente de l'émission n'excède pas le temps de téléchargement en mode Unicast standard, c'est-à-dire en mode P2P standard en l'absence d'attente.

En conséquence, et selon un aspect remarquable du procédé objet de la présente invention, un délai maximum d'attente de l'émission du fichier est donc avantageusement déterminé.

Au-delà de ce délai, il est alors avantageux de déclencher le téléchargement du fichier considéré dans le mode le plus optimisé d'un point de vue réseau et performances de transmission.

Le délai précité peut être :
- fixé par le processus P2P ;
- déterminé par une fonction d'analyse statistique comparant les gains potentiels de la diffusion Multicast différée par rapport à la diffusion Unicast immédiate du type délai déclenché, lorsque, en particulier, le temps d'attente + le temps estimé de téléchargement en Multicast est supérieur au temps estimé en téléchargement Unicast ;
- la mixité, concernant en un délai partiellement fixé et un délai complémentaire établi par une fonction d'analyse statistique.

Dans le cadre de la mise en oeuvre du procédé objet de l'invention, on indique qu'il est également avantageux de décider de limiter au maximum le temps d'attente d'émission Multicast.

Il est donc opportun, dans cette situation, de déterminer un nombre minimum de demandes pour un objet donné au-delà duquel la diffusion Multicast devient plus optimale que la multidiffusion Unicast.

Il est alors avantageux de déterminer, à titre d'exemple non limitatif, un seuil dédié Sᵢ pour chaque objet, c'est-à-dire pour chaque fichier Fᵢ, le seuil Sᵢ étant alors établi ou calculé pour chaque fichier ou objet informatique d'index i.

L'émission est alors déclenchée lorsque le nombre Nᵢ de demandes devient supérieur à la valeur de seuil dédié correspondante, soit pour Nᵢ > Sᵢ. La valeur de seuil Si précitée peut également être fixée ou déterminée statistiquement en fonction des données de sondage (probing) du réseau. La valeur de seuil Si peut être calculée à partir du rapport entre le délai maximum d'attente en Multicast, lui-même calculé en fonction du temps moyen de transmission Unicast, et la croissance du nombre de demandes instantanées pour le fichier Fᵢ.

En ce qui concerne la mise en oeuvre des sous-étapes E₃ respectivement E'₃, tel que représenté en figure 2a ou 2b, on indique que ces étapes consistent en l'envoi d'une réponse aux terminaux Tⱼ client demandeur. En diffusion Multicast, la sous-étape E₃ comprend en outre l'émission vers les terminaux sources des fichiers du message de requête de transmission sur une adresse Multicast.

Pour chaque utilisateur ayant demandé un objet, c'est-à-dire un fichier Fᵢ = Objet 1, le serveur de référencement RS adresse immédiatement une réponse représentée à l'étape 4 de la figure 3b, cette réponse intégrant avantageusement :
- l'adresse IP Multicast @M_Objet 1 sur laquelle l'objet précité est diffusé ;
- le délai maximum d'attente avant la prochaine émission de l'objet en Multicast ;
- le cas échéant, le délai estimé statistiquement avant la prochaine émission Multicast ;
- le cas échéant, le temps déjà écoulé depuis le début de la dernière diffusion Multicast ;
- le cas échéant, la liste des adresses IPSource correspondant aux postes client qui disposent du contenu et qui vont alors servir d'émetteur de contenu.

Cette liste d'adresses IP sources est obligatoire lorsque le protocole Multicast utilisé est du type PIM_SSM, ainsi que mentionné précédemment dans la description.

A la suite de cette réponse, chaque terminal Tj client se met alors en connexion, c'est-à-dire en écoute sur l'adresse Multicast@M_objet 1 (ou sur tous les couples d'adresse @M_Objet1/IP_Source lorsque le protocole Multicast utilisé est de type PIM_SSM) et attend la prochaine diffusion Multicast annoncée.

Une optimisation de la mise en oeuvre du procédé objet de la présente invention peut être effectuée en fonction de la taille de l'objet, c'est-à-dire du fichier à transmettre.

A titre d'exemple non limitatif, l'optimisation précitée peut être établie à partir du rapport entre le temps nécessaire au téléchargement de l'objet en mode Unicast respectivement en mode Multicast.

Le temps de téléchargement en mode Unicast peut être évalué en multipliant le volume de l'objet restant à télécharger par la bande passante descendante moyenne, définie précédemment dans l'introduction à la description, et par le nombre de demandeurs.

Le temps de téléchargement en mode Multicast est évalué en multipliant le volume de l'objet par la moyenne des bandes passantes descendantes des émetteurs recensés pour cet objet, et adjonction du temps de cycle Tps.

Si le temps estimé de téléchargement en mode Unicast est plus faible que le temps de téléchargement Multicast calculé, le terminal Tⱼ, sur ordre du serveur de référencement, démarre ou poursuit le téléchargement en mode Unicast.

Si en revanche il est plus grand, le terminal Tⱼ démarre ou reprend le téléchargement en mode Multicast.

En particulier, lorsque cet objet est volumineux ou le cas échéant, en cours de distribution lors de la demande d'un terminal utilisateur Tⱼ, la réponse précédemment décrite en liaison avec la figure 3b peut indiquer au client utilisateur demandeur à ce terminal Tⱼ de se mettre en écoute sur le canal Multicast en cours.

Dans un tel cas, le client utilisateur peut alors recevoir immédiatement une partie de l'objet en Multicast et devra envoyer une nouvelle demande pour obtenir les paquets déjà diffusés avant sa connexion, c'est-à-dire les paquets manquants sur l'adresse Multicast.

De ce fait, les demandes des clients utilisateurs peuvent alors intégrer un champ permettant de désigner les paquets manquants pour reconstituer un objet complet.

En particulier, dans cette situation, la fonction de réponse au client utilisateur, c'est-à-dire au terminal Tⱼ demandeur, peut alors avantageusement intégrer un module de décision afin de déterminer si la demande partielle sera satisfaite lors de la prochaine réémission de l'objet en Multicast ou au contraire s'il est plus optimal d'utiliser un téléchargement Unicast classique poste à poste afin de compléter l'objet visé.

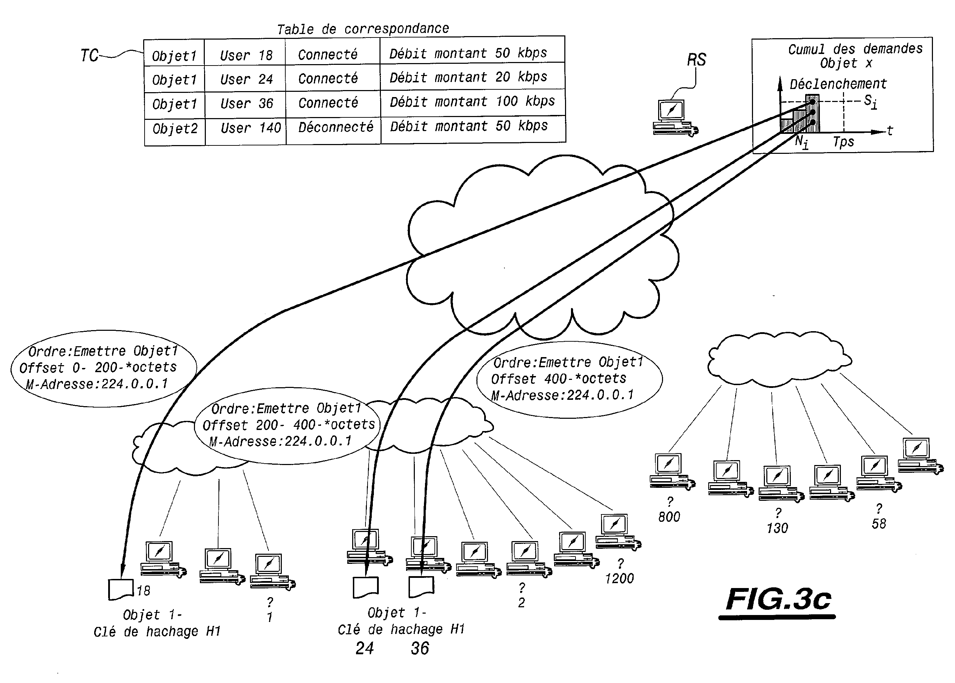

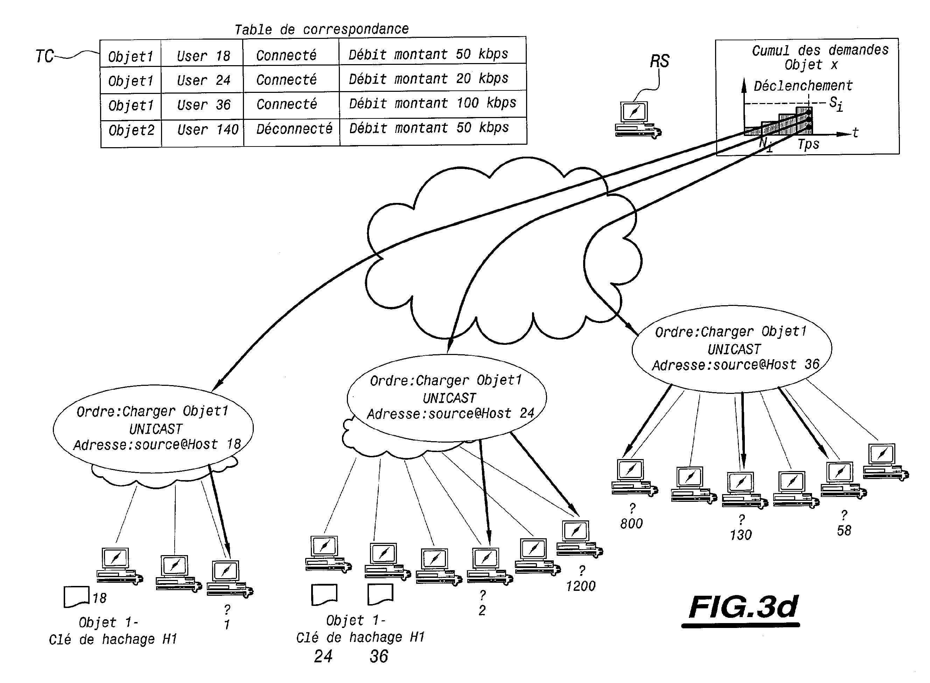

Les figures 3c et 3d représentent, à titre illustratif, la mise en oeuvre des étapes E₃ respectivement E'₃ de la figure 2a ou 2b, l'étape E'₃ étant plus particulièrement déclenchée lorsque le délai Tps est dépassé, délai de mémorisation du nombre de demandes Nᵢ, et que le déclenchement de la diffusion doit être effectué essentiellement en mode Unicast plus particulièrement représenté à la figure 3d.

En référence aux figures 2a et 2b, on comprend, en particulier, que lors du déclenchement de l'un des seuils définis précédemment, c'est-à-dire seuil du nombre de demandes Nᵢ dépassant la valeur effective du seuil correspondant Sᵢ respectivement délai dépassé, c'est-à-dire temps de mémorisation > Tps, les tests correspondants étant mis en oeuvre aux étapes E₂₃ respectivement E'₂₃ de la figure 2a ou 2b, le procédé objet de la présente invention permet de mettre en oeuvre une fonction de prise de décision correspondante. La fonction précitée a pour objet de déterminer quel est le mode de diffusion le plus optimal sur chaque portion du réseau pour atteindre chacun des demandeurs du fichier Fᵢ, c'est-à-dire de l'objet demandé.

Certains des utilisateurs doivent alors télécharger l'objet à partir d'une émission Multicast, alors que d'autres peuvent très bien être amenés à télécharger cet objet par diffusion classique Unicast.

La fonction précitée utilise avantageusement différentes informations :
- localisation des demandeurs et regroupement des demandeurs par réseau, en particulier, à partir de l'adresse j des terminaux Tⱼ des utilisateurs demandeurs connus à partir des fichiers Fᵢ correspondants demandés ;
- localisation des postes source possibles ;
- débit montant disponible sur les postes source précités ;
- réseaux à traverser et performance de ces réseaux correspondante entre les sources et les récepteurs, par exemple.

Selon l'une des caractéristiques particulièrement avantageuses du procédé objet de l'invention, celui-ci permet d'utiliser une diffusion multisource simultanée vers de multiples récepteurs.

En référence à la figure 3c, on indique que les utilisateurs 18, 24 et 36 disposent, par exemple, du fichier Fᵢ, désigné Objet 1, à diffuser mais avec des débits montants disponibles variables respectivement 50, 20, 100 kbps (kilobits/seconde).

Lors d'une diffusion en mode Unicast connu de l'art antérieur, ce sont les débits montants précités qui sont limitants et qui déterminent le délai de transmission effectif des fichiers demandés.

En outre, chaque demandeur doit télécharger le fichier demandé, c'est-à-dire l'objet, Objet 1, sur l'un des trois émetteurs :
- soit successivement en utilisant le débit montant maximum ;
- soit simultanément en divisant le débit montant entre le nombre de demandeurs en cours de téléchargement.

Au contraire, le procédé objet de l'invention autorise la diffusion multisource multirécepteur.

Il permet en particulier de demander simultanément à chaque émetteur, c'est-à-dire aux terminaux référencés 18, 24, 36 sur la figure 3c ou 3d, de diffuser une partie de l'objet souhaité en utilisant la totalité de son débit montant disponible vers une adresse Multicast écoutée par l'ensemble des terminaux Tⱼ dont l'adresse j est bien entendu différente des adresses 18, 24, 36 précitées.

En référence à la figure 3c précitée, on indique qu'il est ainsi possible, conformément au procédé objet de la présente invention, de demander :
- au poste utilisateur émetteur 18 d'émettre les octets 0 à 200 du fichier Fᵢ = Objet 1, en utilisant son débit montant de 50 kbps ;
- au poste utilisateur émetteur 24 d'émettre les octets 200 à 400 du fichier Fᵢ = Objet 1, en utilisant son débit montant de 20 kbps ;
- au poste utilisateur 36 d'émettre les octets restants du fichier Fᵢ = Objet 1 en utilisant son débit montant de 100 kbps.

En référence à l'exemple précité décrit en figure 3c, on comprend, en particulier, que les temps de téléchargement sont donc potentiellement réduits et optimisés et que l'émetteur, peut utiliser son débit D pour servir N récepteurs alors qu'en mode Unicast classique, ce dernier servirait N récepteurs avec un débit D/N.

Toutefois, en mode de diffusion Multicast, les demandeurs doivent tous recevoir le contenu simultanément. Un facteur limitant lors d'un transfert Multicast peut donc consister en le plus petit débit descendant des différents récepteurs.

Les équipements spécialisés Multicast permettent cependant de pallier un tel inconvénient, grâce à des mécanismes de mémorisation et de répétition intermédiaire au niveau des routeurs.

De plus, pour éviter que la diffusion Multicast ne soit pénalisée par les utilisateurs ayant un débit descendant le plus faible, le procédé, objet de la présente invention, peut prévoir la possibilité de demander à ses utilisateurs de passer en mode Unicast classique.

En définitive, la fonction de décision du procédé objet de la présente invention permet de déterminer pour chaque demandeur ou groupe de demandeur :
- une source ou un ensemble de postes source ;
- un mode de diffusion optimal ;
- une organisation de la diffusion.

Suite à l'étape E₂₃ de la figure 2a ou 2b, et en particulier sur réponse positive au test correspondant, l'ensemble des récepteurs demandeurs est en connexion et en écoute sur l'adresse Multicast désignée pour la diffusion du fichier Fᵢ constitué par l'Objet 1.

Le serveur de référencement RS utilise alors sa fonction de décision pour déterminer s'il est opportun d'utiliser une diffusion Multicast ou non. On rappelle que cette fonction de décision peut correspondre sensiblement au mode opératoire indiqué à l'étape E₂₄ de la figure 2b.

Si c'est le cas, le procédé objet de la présente invention permet d'alerter les émetteurs désignés, c'est-à-dire les émetteurs 18, 24 et 36 pour qu'ils envoient une partie du fichier Fᵢ, c'est-à-dire l'Objet 1, dans les conditions de répartition des octets transmis, tel que décrit précédemment dans la description, sur l'adresse Multicast désignée en envoyant un message intégrant :
- la référence du fichier Fᵢ ou objet demandé ;
- l'adresse Multicast utilisée ;
- la partie de l'objet à envoyer, c'est-à-dire l'adresse du premier et du dernier octet correspondant ;
- le cas échéant, un délai d'attente avant de commencer la diffusion à la date de réception du message.

Les postes source d'adresse 18, 24 et 36 précédemment décrits en liaison avec la figure 3c peuvent alors émettre simultanément les données correspondantes sur l'adresse Multicast @M_Objet 1 écoutée par les récepteurs, c'est-à-dire les terminaux demandeurs 1, 2, 1200, 800, 130 et 58 représentés en figure 3c.

En référence à la figure précitée, on indique que l'émission en mode Multicast est déclenchée lorsque, par exemple, le nombre Nᵢ de demandes de diffusion des fichiers Fᵢ est supérieur à la valeur de seuil dédiée Sᵢ, représentée sur les dessins. On comprend, en référence à la même figure 3c, que ce nombre est atteint après un temps d'accumulation inférieur à Tps.

Le routage Multicast est alors exécuté selon le protocole UDP pour "User Data Protocol", les paquets de données étant routés vers l'ensemble des récepteurs en écoute sur cette adresse quel que soit le poste émetteur. Le logiciel d'application installé sur les récepteurs demandeurs 1, 2, 1200, 800, 130 et 58 représentés en figure 3c doit alors recomposer le fichier global à partir des paquets provenant des différentes sources.

Toutefois, la fonction de décision précitée mise en oeuvre par le procédé objet de la présente invention, c'est-à-dire soit sur réponse négative au test E₂₃ et sur réponse positive au test E'₂₃ de la figure 2a, soit sur réponse de la fonction de décision proprement dite E₂₄ représentée en figure 2b peut toutefois conclure que la diffusion Multicast n'est pas justifiée ou que certains des terminaux demandeurs Tⱼ doivent être servis en mode de diffusion Unicast, car ils disposent d'un débit descendant trop limité.

Dans cette situation, le serveur de référencement RS, conformément au procédé objet de la présente invention, permet d'envoyer lui-même un message sur l'adresse Multicast @M_Objet 1 pour signaler à tous ou à une partie des demandeurs que ces derniers doivent utiliser le système de téléchargement Unicast classique.

Un tel message présente avantageusement la forme ci-après :
- référence du fichier Fᵢ, c'est-à-dire objet demandé ;
- statut d'annulation de la diffusion Multicast ;
- éventuellement destinataire, c'est-à-dire adresse de tous ou d'une partie de la liste des utilisateurs concernés par l'annulation de la diffusion en mode Multicast pour ces derniers et renvoi à la diffusion en mode Unicast.

A la réception du message précité, les postes utilisateurs demandeurs concernés peuvent alors réinterroger le serveur de référencement RS en mode P2P classique, c'est-à-dire pour une mise en oeuvre du procédé objet de la présente invention conformément aux étapes E'₃ et E'₄ des figures 2a ou 2b.

Le processus de diffusion en mode Unicast classique pour les étapes E'₃ et E'₄ n'est pas décrit en tant que tel, car il correspond à un processus existant de type classique.

Pour ce qui concerne le déclenchement de la diffusion en mode Unicast du type classique, ainsi que représenté par exemple en figure 3d, on constate qu'aucun nombre de demandes de fichiers demandés Nᵢ n'a dépassé la valeur de seuil correspondante Sᵢ mais que, par contre, le temps d'accumulation a dépassé la valeur de seuil Tₚₛ, ce qui justifie par exemple soit du déclenchement des étapes E'₃ et E'₄ de la figure 2a directement sur réponse négative au test E'₃ de la figure 2a précitée, soit au contraire le déclenchement des mêmes sous-étapes E'₃ et E'₄ de la figure 2b après mise en oeuvre de la fonction de décision E₂₄.

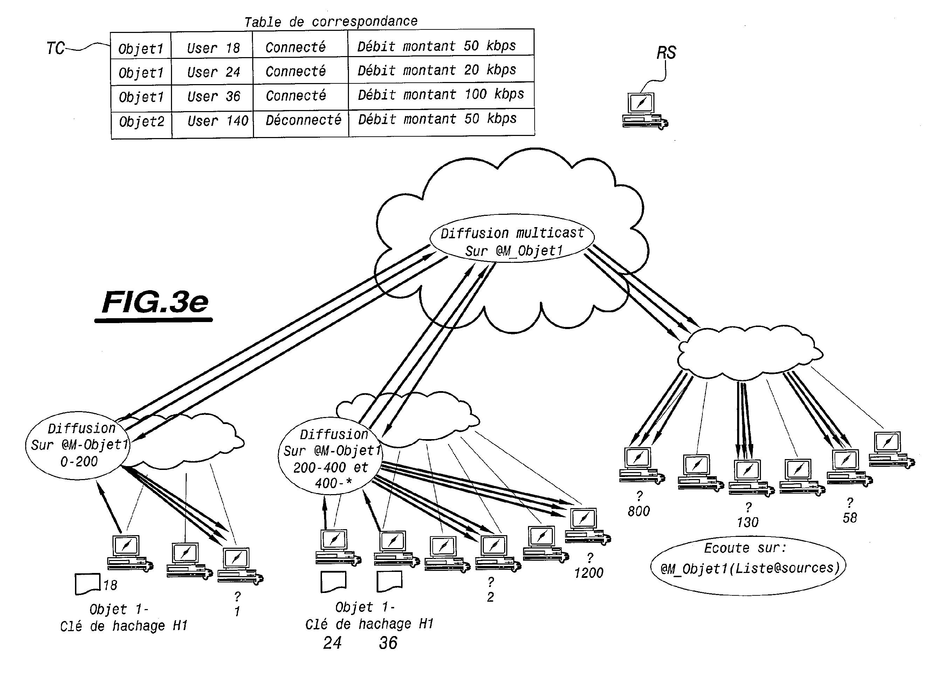

La figure 3e illustre de manière plus détaillée le processus de diffusion Multicast proprement dit, c'est-à-dire l'étape E₄ de la figure 2a ou 2b, après déclenchement de la diffusion Multicast, soit en réponse positive au test E₂₃ de la figure 2a, soit suite à la fonction de décision E₂₄ et au choix de cette dernière, ainsi que représenté en figure 2b.

Dans cette situation, ainsi que décrit précédemment dans la description, toutes les sources, c'est-à-dire les terminaux 18, 24 et 36 représentés en figure 3c, 3d ou 3e étant averties, diffusent une portion du fichier Fᵢ dont elles disposent, c'est-à-dire du fichier Objet 1 en Multicast simultanément.

Le processus de routage Multicast connu de l'état de la technique permet alors d'alimenter l'ensemble des récepteurs en écoute, c'est-à-dire les récepteurs demandeurs terminaux Tⱼ 1, 2, 1200, 800, 130 et 58.

Toutefois, la diffusion étant multisource, les terminaux récepteurs précités doivent être en mesure de recomposer l'objet demandé au niveau applicatif. Une telle fonction est réalisée de manière classique par une numérotation des paquets transmis, à partir d'une fonction monotone croissante de l'adresse de départ, par exemple.

L'étape précitée E₄ implique l'existence de la mise en oeuvre d'une telle fonction de numérotation/identification des paquets au niveau des terminaux émetteurs 18, 24, 36 et récepteurs 1, 2, 1200, 800, 130 et 58 précités.

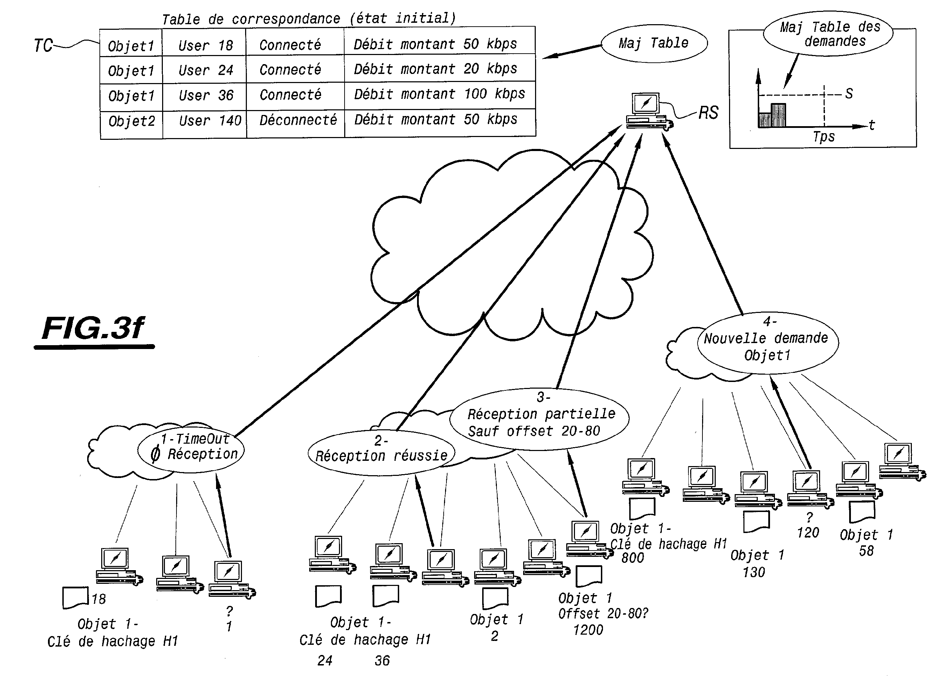

La figure 3f illustre de manière détaillée la mise en oeuvre des étapes E₅ et E₆ des figures 2a ou 2b.

Ainsi que représenté sur la figure précitée, le procédé objet de l'invention met en oeuvre une fonction de transmission d'un message de compte-rendu des terminaux utilisateurs vers le serveur de référencement RS. Cette opération permet de savoir si la diffusion s'est déroulée de manière correcte, une fonction de traitement des problèmes pouvant en outre être appelée sinon.

Ainsi que représenté sur la figure 3f, on a distingué les postes utilisateurs dans différents états juste après la diffusion du fichier Fᵢ Objet 1 :
- le poste utilisateur client Tⱼ 1 n'a reçu aucun message (ø Réception) sur l'adresse IP Multicast@M_Objet1 après avoir attendu le temps d'attente maximum ;
- le poste utilisateur Tⱼ 2 indique qu'il a reçu la totalité du fichier Objet 1 ce qui implique que le serveur de référencement RS doit l'ajouter à la liste des sources possibles pour ce fichier Objet 1 ;
- le poste utilisateur Tⱼ 1200 indique qu'il n'a pas reçu une partie du fichier Objet 1 considéré.

D'autres utilisateurs viennent par exemple de demander le fichier Fⱼ Objet 1 qui vient d'être transmis.

Ainsi, on comprend que l'étape de transmission d'un message de compte-rendu permet d'appeler une fonction de traitement des problèmes laquelle coopère en collaboration avec le processus décrit en liaison avec l'étape E₂ et en particulier les étapes E₂₁ et E₂₂ des figures 2a et 2b.

En définitive, c'est la fonction mise en oeuvre par le processus de traitement des réponses qui doit indiquer à chaque poste client utilisateur Tⱼ s'il doit télécharger les parties manquantes du fichier Fᵢ demandées soit en attendant la prochaine réémission en mode Multicast, soit au contraire en utilisant le mode Unicast classique.

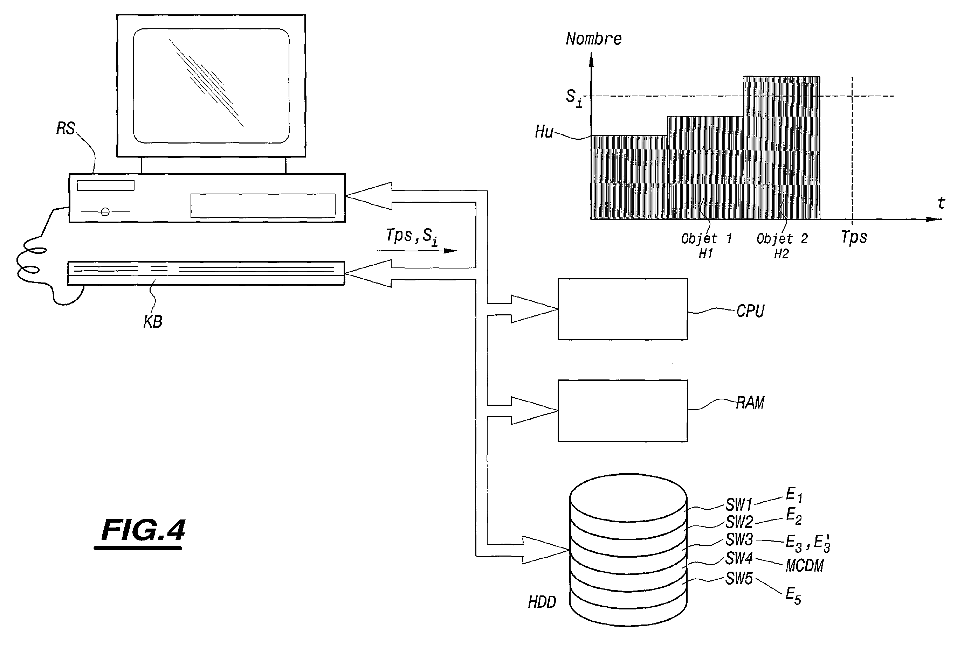

Une description plus détaillée d'un serveur centralisé de référencement plus particulièrement adapté à la mise en oeuvre du procédé objet de la présente invention sera maintenant donnée en liaison avec la figure 4.

D'une manière générale, on indique que le serveur de référencement précité peut-être implanté sur un lieu quelconque du réseau Internet par exemple et directement accessible par les utilisateurs. L'ensemble constitué par les utilisateurs et le serveur de référencement RS constitue ainsi un réseau de diffusion poste à poste de fichiers demandés par téléchargement par une pluralité de messages de demandes de téléchargement adressées à ce serveur de référencement par les terminaux d'utilisateurs précités conformément au procédé objet de la présente invention.

Ainsi que représenté en figure 4, le serveur de référencement précité RS comporte au moins des ressources, notées KB, d'établissement d'un délai prédéterminé intervalle de temps entre un instant de début et un instant de fin de délai ce délai étant noté Tₚₛ. On comprend, en particulier, que la ressource précitée peut être constituée par tout moyen d'insertion au clavier du serveur centralisé RS d'une valeur de délai, laquelle peut être adaptée par l'intermédiaire d'un menu déroulant, par exemple, à tout type de fichier Fᵢ constitué, ainsi que représenté sur la figure 4, par les fichiers Objet 1 Objet 2 par exemple. La valeur de seuil temporelle peut être choisie par l'opérateur ou calculée statistiquement en fonction du nombre de fichiers demandés et des phénomènes de mode précédemment mentionnés dans la description. Les ressources d'établissement du délai prédéterminé permettent également d'introduire à titre d'exemple non limitatif les valeurs des différents seuils Sᵢ, Sᵢ désignant la valeur d'un seuil dédié pour un fichier Fᵢ, tel que Objet 1 ou Objet 2 représentés en figure 4.

Le serveur de référencement RS est bien entendu muni de ressources de comptage formées par une unité centrale de calcul CPU, une mémoire de travail de type RAM et une unité de stockage magnétique par exemple HDD, l'ensemble de ces ressources permettant le comptage et la mémorisation du nombre des messages de demandes de téléchargement reçus pendant le délai Tₚₛ précédemment mentionné. On rappelle que, sur la figure 4, le fichier Fᵢ formé par Objet 2 et muni d'une clé de hachage H₂, est réputé dépasser la valeur de seuil correspondante Sᵢ = S₂ antérieurement à la valeur temporelle Tₚₛ illustrée sur la même figure. Bien entendu le comptage et la mémorisation du nombre des messages de demandes de téléchargement reçus pendant le délai prédéterminé peut être mis en oeuvre à partir d'un module logiciel SW₁ mémorisé sur l'unité de mémorisation HDD et appelé par l'unité centrale dans ce but. Le module logiciel SW₁ permet la mise en oeuvre de la sous-étape E₁ des figures 2a ou 2b, par exemple.

Le serveur de référencement RS représenté en figure 4 comprend également un module de comparaison du nombre de fichiers mémorisés par fichier de même nom à une valeur de seuil, ainsi qu'illustré sur la figure 4 précitée, pour les fichiers Fᵢ formés par Objet 1 et Objet 2 vis-à-vis des valeurs de seuil S₁, S₂.

Le module logiciel correspondant, noté SW₂, est également mémorisé sur l'unité de mémorisation magnétique HDD, par exemple, et appelé par l'unité centrale CPU pour exécution et mise en oeuvre des étapes E₂ c'est-à-dire E₂₁, E₂₂ et E₂₃, E'₂₃ tel que représenté en figures 2a ou 2b.

La réponse positive au test E₂₃, respectivement E'₂₃ précité permet alors la mise en oeuvre d'un module logiciel SW₃ mémorisé sur la même unité de mémorisation HDD et appelée pour exécution par l'unité centrale CPU pour l'exécution de la mise en oeuvre d'un signal de commande de transmission de fichiers par diffusion Multicast à l'étape E₃. Sinon, lorsque pour le fichier Objet 1 par exemple représenté en figure 4 et lorsque la durée est supérieure à la valeur de seuil de durée Tₚₛ pour ce fichier, le nombre de messages de demandes pour ce fichier étant inférieur à la valeur de seuil correspondante, la commande de l'étape E'₃ représentée en figure 2a ou 2b est exécutée afin d'engendrer un signal de commande de transmission de ce fichier par diffusion Unicast.

Bien entendu le serveur de référencement RS représenté en figure 4 comprend une unité de mémorisation des adresses des clients demandeurs de fichiers. On rappelle que cette opération est réalisée par l'intermédiaire de chaque fichier demandé Fᵢⱼ et en particulier par l'index j représentant l'adresse de chaque poste demandeur de fichier. Mémorisé à priori dans la mémoire de travail RAM, la valeur des adresses de clients demandeurs de fichiers mémorisés peut alors être sauvegardée sur l'unité HDD de manière classique, ceci afin de permettre d'évaluer une information de localisation géographique ou de proximité réseau des clients demandeurs précités. La zone de mémorisation des adresses des clients demandeurs n'est pas représentée au dessin.

Enfin, le serveur de référencement RS objet de la présente invention comporte, ainsi que représenté sur la même figure 4, un module logiciel de gestion des cycles de diffusion Multicast permettant de vérifier que le temps cumulé de transmission totale d'un fichier donné F₂ par exemple n'excède pas le temps de téléchargement de ce fichier en mode Unicast. Ce module logiciel représenté par SW₄, MCDM sur l'unité de mémorisation HDD du serveur RS permet sur appel de l'unité centrale CPU de mettre en oeuvre par exemple l'étape E₂₄ de la figure 2b précédemment décrite dans la description.

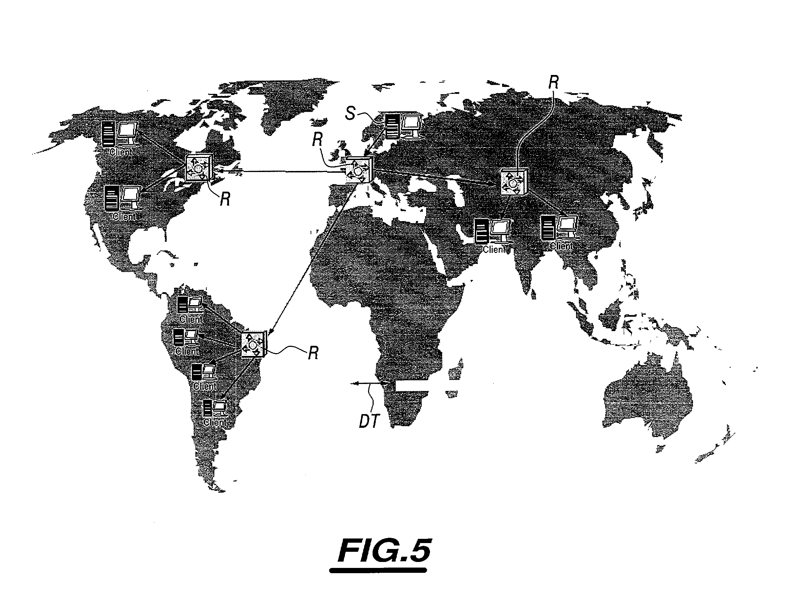

Enfin la figure 5 représente la mise en oeuvre du procédé objet de la présente invention et du serveur centralisé précédemment décrit dans la description pour l'exécution d'une diffusion de données en réseau de diffusion de contenus CDN.

Dans un réseau CDN les données de contenus de fichiers WEB ou transmis en mode "streaming" sont répliquées depuis une source S vers des serveurs distribués dans le monde et appelés réplicats, désignés R, ou "surrogates".

La réplication des fichiers de la source S vers les réplicats R peut être effectuée en mode de diffusion Multicast. Il s'agit en général d'un Multicast, dit applicatif c'est-à-dire simulé et non pas de vrai Multicast réseau géré par les routeurs.

En revanche, lors de la requête d'un terminal client demandeur Tⱼ, par exemple d'un internaute, les contenus sont toujours délivrés par un réplicat R en mode Unicast conformément à la technique actuelle.

Au contraire et conformément au procédé objet de l'invention, chaque réplicat peut être organisé pour assurer la diffusion en mode Multicast respectivement en mode Unicast ainsi que décrit précédemment dans la description, chaque réplicat R étant assimilé à un utilisateur source de contenu.

Dans ces conditions chaque réplicat R peut être configuré de manière à opérer un fonctionnement conforme à l'objet de la présente invention, à savoir la possibilité d'agréger les demandes concernant le même objet pendant un certain temps, pour délivrer ce contenu une seule fois en mode Multicast vers l'ensemble des récepteurs demandeurs qui en ont fait la demande auprès de lui.

En conséquence, le processus opératoire de chaque réplicat R peut être conforme à celui décrit précédemment dans la description pour les figures 2a ou 2b, la diffusion intervenant à partir de chaque réplicat soit en mode Multicast soit en mode Unicast conformément à la mise en oeuvre du procédé objet de l'invention.

Dans ces conditions, chaque réplicat R peut avantageusement jouer le rôle d'un serveur de référencement RS pour un groupe de terminaux demandeurs clients ayant une localisation géographique commune au niveau d'un continent par exemple. Il peut simplement être vu comme une source Multicast privilégiée du réseau P2P global (vu comme un client normal).

En outre, la charge de la diffusion des fichiers demandés peut être répartie entre les différents réplicats R du réseau CDN en fonctionnant en outre en mode multisource.

Le procédé et le serveur de référence, objets de la présente invention, ne sont pas limités dans leur mise en oeuvre au mode P2P et au réseau CDN, tout autre réseau de distribution de contenu pouvant être configuré, de façon à mettre en oeuvre le procédé objet de la présente invention.

## Revendications

1. Procédé de diffusion poste à poste de fichiers demandés par téléchargement par une pluralité de messages de demandes de téléchargement adressés à un serveur de référencement par des terminaux d'utilisateurs, **caractérisé en ce que** :
- on mémorise le nombre de ces messages de demandes de téléchargement reçus pendant un délai prédéterminé, et, si, pour l'un de ces fichiers déterminé, le nombre de messages de demandes mémorisé est supérieur à une valeur de seuil,
- on transmet ledit fichier par diffusion Multicast, et, sinon,
- on transmet ledit fichier par diffusion Unicast.

2. Procédé selon la revendication 1, **caractérisé en ce que** l'étape selon laquelle on mémorise le nombre de messages de demandes comporte une sous-étape de recensement des terminaux utilisateurs connectés et des fichiers disponibles auprès de chaque client utilisateur.

3. Procédé selon la revendication 2, **caractérisé en ce que** l'étape selon laquelle on mémorise le nombre de messages de demandes comporte, suite à la sous-étape de recensement, une sous-étape de comptabilisation et de mémorisation des messages de demande, accompagnée d'une sous-étape de vérification des réponses aux messages de demande et de transmission de ces réponses aux utilisateurs demandeurs.

4. Procédé selon l'une des revendications 2 ou 3, **caractérisé en ce que**, suite à la sous-étape de comptabilisation et de mémorisation, mais préalablement à l'étape selon laquelle on transmet ledit fichier par diffusion Multicast, celui-ci comporte en outre :
- une sous-étape de test de comparaison du nombre de messages de demande à ladite valeur de seuil ; et, sur réponse positive audit test,
- une sous-étape de transmission aux sources desdits fichiers d'une requête de transmission sur une adresse Multicast.

5. Procédé selon l'une des revendications 2 ou 3, **caractérisé en ce que**, suite à la sous-étape de comptabilisation et de mémorisation, mais préalablement à l'étape selon laquelle on transmet ledit fichier par diffusion Unicast, celui-ci comporte en outre :
- une sous-étape de test de comparaison du temps de mémorisation audit délai prédéterminé ; et, sur réponse positive à ladite sous-étape de test ledit délai étant atteint,
- une sous-étape de transmission aux terminaux utilisateurs d'un ordre de télécharger par diffusion Unicast.

6. Procédé selon l'une des revendications 1 à 5, **caractérisé en ce que** les étapes de transmission par diffusion Multicast respectivement par diffusion Unicast sont suivies d'une étape de transmission d'un message de compte rendu des terminaux utilisateurs vers le serveur de fichiers.

7. Procédé selon l'une des revendications 1 à 6, **caractérisé en ce que** tout client recensé parmi les utilisateurs connectés au réseau signale sa présence périodiquement.

8. Procédé selon l'une des revendications 3 à 7, **caractérisé en ce que** chaque réponse envoyée par le serveur de référencement à chacun des clients utilisateurs demandeurs comporte au moins :
- l'adresse IP Multicast sur laquelle le fichier demandé par ce client utilisateur est diffusé,
- le délai maximum d'attente avant la prochaine diffusion Multicast à l'adresse IP multicast considérée, ce qui permet à chaque client utilisateur demandeur de se placer en réception sur ladite adresse IP Multicast considérée.

9. Procédé selon l'une des revendications 4 ou 5, **caractérisé en ce que** préalablement à la sous-étape de transmission aux sources de fichiers d'une requête de transmission sur une adresse Multicast respectivement de transmission aux terminaux utilisateurs d'un ordre de télécharger par diffusion Unicast, celui-ci comporte en outre une sous-étape de détermination du mode de diffusion optimal sur chaque portion du réseau pour atteindre chacun des demandeurs du fichier demandé, à partir d'informations telles que localisation des clients demandeurs et regroupement des demandeurs par réseau, localisation des postes sources disponibles, débits montants disponibles sur ces postes sources, réseaux à traverser et performances réseaux correspondantes entre source et récepteurs.

10. Procédé selon l'une des revendications 1 à 9, **caractérisé en ce que** celui-ci opère en diffusion multi-sources, multi-récepteurs, chaque client émetteur diffusant au moins une partie du fichier demandé au moyen de la totalité de son débit montant disponible vers une adresse de diffusion multicast sur laquelle l'ensemble des clients demandeur est connecté.

11. Serveur de référencement de diffusion poste à poste de fichiers demandés par téléchargement par une pluralité de messages de demandes de téléchargement adressés à ce serveur centralisé par des terminaux d'utilisateurs, **caractérisé en ce que** ledit serveur centralisé de référencement comporte au moins :
- des moyens d'établissement d'un délai prédéterminé, intervalle de temps entre un instant de début et un instant de fin de délai ;
- des moyens de comptage et de mémorisation du nombre de ces messages de demandes de téléchargement reçus pendant ledit délai prédéterminé ;
- des moyens de comparaison du nombre de fichiers mémorisés, par fichiers de même nom, à une valeur de seuil, et, si pour l'un de ces fichiers déterminé, le nombre de messages de demandes mémorisé est supérieur à cette valeur de seuil :
- des moyens de commande actionnés par cette comparaison supérieure permettant d'engendrer un signal de commande de transmission de ce fichier par diffusion multicast, et
- sinon, si pour l'un de ces fichiers déterminé le nombre de messages de demandes mémorisé est inférieur à cette valeur de seuil,
- des moyens de commande actionnés par cette comparaison inférieure permettant d'engendrer un signal de commande de transmission de ce fichier par diffusion Unicast.

12. Serveur de référencement selon la revendication 11, **caractérisé en ce que** celui-ci comporte en outre des moyens de mémorisation des adresses des clients demandeurs de fichier, ce qui permet d'évaluer une information de localisation géographique ou de proximité réseau.

13. Serveur de référencement selon l'une des revendications 11 ou 12, **caractérisé en ce que** celui-ci comporte un module de gestion des cycles de diffusion Multicast, permettant de vérifier que le temps cumulé de transmission total du fichier en mode Multicast n'excède pas le temps de téléchargement de ce fichier en mode Unicast.

14. Utilisation du procédé selon les revendications 1 à 10 respectivement du serveur de référencement selon les revendications 11 à 13 pour l'exécution d'une diffusion de données en réseau de diffusion de contenu (CDN), dans lequel les données sont répliquées depuis une source vers des serveurs désignés réplicats, chaque réplicat étant organisé pour assurer la diffusion en mode Multicast respectivement Unicast, selon l'une des revendications 1 à 10.

15. Utilisation selon la revendication 14, dans laquelle chaque réplicat joue le rôle d'un serveur de référencement pour un groupe de terminaux demandeurs clients ayant une localisation géographique commune.
